# EUROPEAN PATENT SPECIFICATION

(11) **EP 4 286 234 B1**
(45) Date of publication and mention of the grant of the patent: **15.04.2026**
(21) Application number: 22758694.8
(22) Date of filing: 12.01.2022
(51) Int. Cl.: B60W 60/00, G05D 1/617, G01C 21/34, G05D 1/242, G05D 1/246, G05D 1/633, G05D 1/646, G05D 109/10, G05D 107/13

(54) **METHOD AND APPARATUS FOR STARTING UNMANNED VEHICLE, ELECTRONIC DEVICE, AND COMPUTER-READABLE MEDIUM**
VERFAHREN UND VORRICHTUNG ZUM STARTEN EINES UNBEMANNTEN FAHRZEUGS, ELEKTRONISCHE VORRICHTUNG UND COMPUTERLESBARES MEDIUM
PROCÉDÉ ET APPAREIL POUR DÉMARRER UN VÉHICULE SANS CONDUCTEUR, DISPOSITIF ÉLECTRONIQUE ET SUPPORT LISIBLE PAR ORDINATEUR

(30) Priority: 24.02.2021 CN 202110206772
(43) Date of publication of application: 06.12.2023
(73) Proprietor: Jingdong Kunpeng (Jiangsu) Technology Co., Ltd., Changshu, Jiangsu 215558 (CN)
(72) Inventor: WANG, Haoran, Changshu, Jiangsu 215558 (CN); ZHANG, Liangliang, Changshu, Jiangsu 215558 (CN)
(74) Representative: Huang, Liwei
(86) International application number: PCT/CN2022/071589
(87) International publication number: WO 2022/179328

(56) References cited:
- CN-A- 108 256 664
- CN-A- 109 724 612
- CN-A- 110 220 528
- CN-A- 112 918 487
- JP-A- 2017 111 552
- US-B2- 10 889 323

## Description

### TECHNICAL FIELD

The embodiments of the present disclosure relate to the technical field of computers, in particular to a method and apparatus for starting an unmanned vehicle, an electronic device, and a computer-readable medium.

### BACKGROUND

Unmanned vehicles need to start in scenarios such as residential areas, office buildings and shopping malls with a large number of vehicles and pedestrians as well as complex environments. In these scenarios, there is often no lane line, and it is necessary to guide the unmanned vehicle to the reference start position of the lane line to ensure normal operation of the unmanned vehicle. At present, the commonly used starting method is to set a reference start position in advance, so that the unmanned vehicle may drive to the reference start position.

US 10,889,323 B2 discloses a method and device for carrying out an automatic drive of a vehicle, which mainly includes: providing at least one stored trajectory for a current position of the vehicle; detecting or receiving additional information (e.g., occupancy status of a parking space, user preference, vehicle pose, etc.); selecting one trajectory from the pre-stored trajectories based on this additional information; and controlling the vehicle to drive along the selected trajectory.

### SUMMARY

The summary of the present disclosure is intended to briefly introduce the concepts, which will be described in detail in the detailed description of the embodiments later. The summary of the present disclosure is not intended to identify key or necessary features of the technical solution required for protection, nor is it intended to limit the scope of the technical solution required for protection.

Some embodiments of the present disclosure propose a method and apparatus for starting an unmanned vehicle, an electronic device, and a computer-readable medium to solve one or more of the technical problems mentioned in the background section above.

In a first aspect, some embodiments of the present disclosure provide a method for starting the unmanned vehicle, including: in response to completion of a task of the unmanned vehicle at a current node, determining occupancy state information of a reference start position on a guide line, where the guide line is a preset driving route of the unmanned vehicle from the current node to a next node, the reference start position is a position on the guide line to be reached by the unmanned vehicle from a current position, and the occupancy state information is an "occupied" state or an "unoccupied" state; in response to a determination that the occupancy state information is the "occupied" state, projecting the current position of the unmanned vehicle to the guide line to determine an initial mileage value of the current position on the guide line; determining a reference start mileage value of the reference start position on the guide line; and generating a target start point sequence on the basis of the reference start mileage value and the initial mileage value.

In a second aspect, some embodiments of the present disclosure provide an apparatus for starting the unmanned vehicle, including: a first determining unit, configured to determine occupancy state information of a reference start position on a guide line in response to completion of a task of the unmanned vehicle at a current node, where the guide line is a preset driving route of the unmanned vehicle from the current node to a next node, the reference start position is a position on the guide line to be reached by the unmanned vehicle from a current position, and the occupancy state information is an "occupied" state or an "unoccupied" state; a projecting unit, configured to project the current position of the unmanned vehicle to the guide line in response to a determination that the occupancy state information is the "occupied" state to determine an initial mileage value of the current position on the guide line; a second determining unit, configured to determine a reference start mileage value of the reference start position on the guide line; and a generation unit, configured to generate a target start point sequence on the basis of the reference start mileage value and the initial mileage value.

In a third aspect, an embodiment of the present disclosure provides an electronic device, including: at least one processor; and a storage apparatus, configured to have at least one program stored thereon, where when executed by the at least one processor, the at least one program enables the at least one processor to implement the method described in the first aspect.

In a fourth aspect, an embodiment of the present disclosure provides a computer-readable medium storing a computer program thereon, where when the program is executed by a processor, the method described in the first aspect is implemented.

### BRIEF DESCRIPTION OF DRAWINGS

The above and other features, advantages and aspects of each embodiment of the present disclosure will become more apparent by combining the accompanying drawings and referring to the following detailed description of the embodiments. In the drawings, like or similar drawing marks denote like or similar elements. It should be understood that the drawings are schematic, and components and elements may not necessarily be drawn to scale.
FIG. 1 is a schematic diagram of an application scenario of a method for starting an unmanned vehicle according to some embodiments of the present disclosure;
FIG. 2 is a flowchart of some embodiments of a method for starting an unmanned vehicle according to the present disclosure;
FIG. 3 is a flowchart of some other embodiments of a method for starting an unmanned vehicle according to the present disclosure;
FIG. 4 is a flowchart of some more embodiments of a method for starting an unmanned vehicle according to the present disclosure;
FIG. 5 is a schematic structural diagram of some embodiments of an apparatus for starting an unmanned vehicle according to the present disclosure; and
FIG. 6 is a schematic structural diagram of an electronic device suitable for implementing some embodiments of the present disclosure.

### DETAILED DESCRIPTION OF THE EMBODIMENTS

Embodiments of the present disclosure will be described in greater detail below with reference to the drawings. Although some embodiments of the present disclosure are shown in the drawings, it should be understood that the present disclosure can be implemented in various forms and should not be confined by the embodiments elaborated herein. On the contrary, these embodiments are provided for a more thorough and complete understanding of the present disclosure. It should be understood that the drawings and embodiments disclosed in the present disclosure are only for illustrative purposes and are not intended to limit the protection scope of the present disclosure.

In addition, it should be noted that, for the convenience of description, only the parts related to the relevant invention are shown in the accompanying drawings. The embodiments and features in the embodiments of the present disclosure may be combined with each other without conflict.

It should be noted that the concepts such as "first" and "second" mentioned in the present disclosure are only used to distinguish different apparatus, modules or units, and are not intended to limit the order or interdependence of the functions performed by these apparatus, modules or units.

It should be noted that the modifications of "one" and "a plurality of" mentioned in the present disclosure are illustrative rather than restrictive, and those skilled in the art should understand that unless otherwise explicitly stated in the context, "one" and "a plurality of" should be understood as "one or more".

The names of the messages or information exchanged between multiple apparatus in the embodiments of the present disclosure are for illustrative purposes only and are not intended to limit the scope of these messages or information.

A related unmanned vehicle starting method is, for example, to set a reference start position in advance, so that the unmanned vehicle may drive to the reference start position. Usually, there is the following technical problem: when the reference start position is occupied, the unmanned vehicle will not be able to enter the start position normally, and the start position is required to be reselected manually, which reduces the operating efficiency of unmanned vehicle.

In order to solve the problem described above, some embodiments of the present disclosure provide a method and apparatus for starting an unmanned vehicle, which may dynamically generate target start points, facilitate the unmanned vehicle to enter the start position normally, and improve the operating efficiency of the unmanned vehicle.

The present disclosure will be described below in detail with reference to the accompanying drawings and in conjunction with the embodiments.

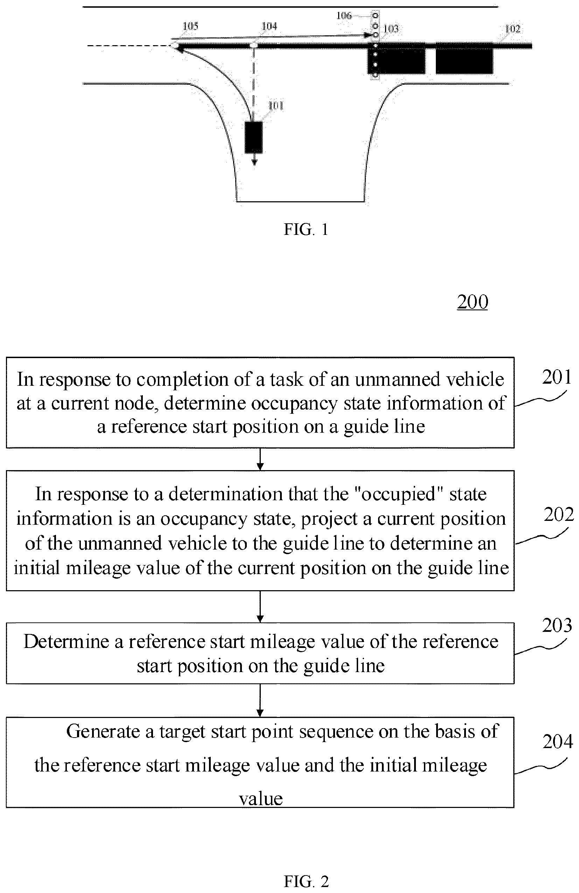

FIG. 1 is a schematic diagram of an application scenario of a method for starting an unmanned vehicle according to some embodiments of the present disclosure.

In the application scenario of FIG. 1, unmanned vehicle 101, guide line 102, reference start position 103, projection position 104 of the unmanned vehicle 101 on the guide line 102, and target start point sequence 105 are included. Firstly, when the unmanned vehicle 101 receives a task, a map system may be called to determine the current position of the unmanned vehicle 101. Then, the unmanned vehicle 101 may use devices such as a radar or wireless sensor to sense whether the reference start position 103 is occupied by an obstacle. Finally, the unmanned vehicle 101 combines the data in the map system and the data sensed by the wireless sensor to carry out dynamic programming, so that the unmanned vehicle 101 can drive to the start position.

In practice, firstly, in response to completion of a task of the unmanned vehicle 101 at a current node, occupancy state information of a reference start position 103 on a guide line 102 may be determined through devices such as a radar or camera on the unmanned vehicle 101. Where the guide line 102 is a preset driving route of the unmanned vehicle 101 from the current node to a next node, the reference start position 103 is a position on the guide line 102 to be reached by the unmanned vehicle from a current position, and the occupancy state information is an "occupied" state or an "unoccupied" state. Here, the reference start position 103 may be the point where the unmanned vehicle 101 coincides with the center of the head of the unmanned vehicle during start. Here, the current position may refer to the center point of the head of the unmanned vehicle 101. Secondly, in response to a determination that the occupancy state information is an "occupied" state, the unmanned vehicle 101 may project the current position to the guide line 102 through devices such as a radar to obtain a projection position 104 of the unmanned vehicle 101 on the guide line 102. Thus, the initial mileage value of the current position on the guide line 102 is determined. Here, the initial mileage value may refer to the value of the distance between the projection position 104 and the start point 105 on the guide line 102. Then, the reference start mileage value of the reference start position 103 on the guide line 102 is determined. Here, the reference start mileage value may refer to the value of the distance between the reference start position 103 and the start point 105 on the guide line 102. Finally, the unmanned vehicle 101 may generate a target start point sequence 106 on the basis of the reference start mileage value and the initial mileage value. Thus, the start position is reselected according to the actual situation near the reference start position 103 when the reference start position 103 is occupied and no manual intervention is required.

Continuing with reference to FIG. 2, flowchart 200 of some embodiments of a method for starting an unmanned vehicle according to the present disclosure is shown. The method for starting the unmanned vehicle includes the following steps:

step 201, in response to completion of a task of the unmanned vehicle at a current node, determine occupancy state information of a reference start position on a guide line.

In some embodiments, the execution subject of the method for starting the unmanned vehicle may be the unmanned vehicle 101 shown in FIG. 1, or it may be an unmanned vehicle scheduling device (such as a computing device), etc. Here, the unmanned vehicle 101 is taken as the executing subject. In response to completion of the task of the unmanned vehicle at the current node, the unmanned vehicle may detect the occupancy state information of the reference start position on the guide line through devices such as a radar or wireless sensor. Where the guide line refers to the preset driving route of the unmanned vehicle from the current node to a next node, or it may also refer to a pre-arranged guide track. Here, the reference start position is the position where the unmanned vehicle reaches the guide line from the current position. Here, the occupancy state information is either an "occupied" state or an "unoccupied" state. Here, the reference start position may be the point where the unmanned vehicle coincides with the center of the head of the unmanned vehicle during start, or it may be set according to actual needs.

Step 202, in response to a determination that the occupancy state information is an "occupied" state, a current position of the unmanned vehicle is projected to the guide line to determine an initial mileage value of the current position on the guide line.

In some embodiments, in response to the determination that the occupancy state information is the "occupied" state, the unmanned vehicle may project the current position of the unmanned vehicle to the guide line to determine the initial mileage value of the current position on the guide line. In practice, firstly, the unmanned vehicle may scan the guide line through a radar to project the position of the unmanned vehicle vertically onto the guide line. Thus, the projection position of the unmanned vehicle on the guide line may be obtained. Here, the current position of the unmanned vehicle may be regarded as a point, that is, the center point of the unmanned vehicle. Then, the unmanned vehicle may determine the distance between the projection position and the start point of the guide line as the initial mileage value. For example, the initial mileage value may be 7 meters.

Step 203, a reference start mileage value of the reference start position on the guide line is determined.

In some embodiments, the unmanned vehicle may detect the distance between the reference start position and the start point of the guide line through a radar. Thus, the distance between the reference start position and the start point of the guide line may be determined as the reference start mileage value. For example, the reference start mileage value may be 10 meters.

Step 204, a target start point sequence is generated on the basis of the reference start mileage value and the initial mileage value.

In some embodiments, firstly, the unmanned vehicle may detect a road width on both sides of the guide line where the reference start position is located through a radar. Then, on both sides of the road, a start width may be taken every preset width. Here, the preset width may be the width of the unmanned vehicle body, or it may be set according to actual needs. Then, the reference start mileage value and the start width may be combined to generate start point coordinates as the target start point. Next, the sum of the initial mileage value and half of the difference between the reference start mileage value and the initial mileage value is determined as a new reference start mileage value, and the new target start point is determined again. Finally, the obtained target start points are sorted from large to small according to the reference start mileage value, and then the target start points of the same reference start mileage value are sorted according to the principle that the priority of the target start points on the left side of the road is greater than the priority of the target start points on the right side of the road. Where the smaller the start width, the higher the priority.

As an example, firstly, the unmanned vehicle may detect a road width of 5 meters on both sides of the guide line where the reference start position is located through a radar. The width of the unmanned vehicle body may be 1 meter, which means that four start widths may be taken on each of both sides of the road. For example, the four start widths on the left of the road may be "1, 2, 3, 4". The four start widths on the right of the road may be "1, 2, 3, 4". Then, the reference start mileage value "10" and the left start width "1" may be combined to generate start point coordinates as the left target start point (10, 1). Thus, a left target start point group {(10, 1); (10, 2); (10, 3); (10, 4)} may be obtained. A right target start point group {(10, 1); (10, 2); (10, 3); (10, 4)} may be obtained. Next, the sum "8.5" of the initial mileage value "7" and half "1.5" of the difference between the reference start mileage value "10" and the initial mileage value "7" is determined as a new reference start mileage value. Thus, a second left target start point group {(8.5, 1); (8.5, 2); (8.5, 3); (8.5, 4)} may be obtained. A second right target start point group {(8.5, 1); (8.5, 2); (8.5, 3); (8.5, 4)} may be obtained. Finally, the obtained target start point groups are sorted to obtain the target start point sequence: the left target start point group {(10, 1); (10, 2); (10, 3); (10, 4)}; the right target start point group {(10, 1); (10, 2); (10, 3); (10, 4)}; the left target start point group {(8.5, 1); (8.5, 2); (8.5, 3); (8.5, 4)}; and the right target start point group {(8.5, 1); (8.5, 2); (8.5, 3); (8.5, 4)}.

The embodiments of the present disclosure have the following beneficial effects: through the method for starting the unmanned vehicle in some embodiments of the present disclosure, the target start points may be dynamically generated, the unmanned vehicle is facilitated to enter the start position normally, and the operating efficiency of the unmanned vehicle is improved. Specifically, the reason for the low operating efficiency of the unmanned vehicle is that when the reference start position is occupied, the unmanned vehicle will not be able to enter the start position normally, and the start position is required to be reselected manually, which reduces the operating efficiency of unmanned vehicle. Based on this, for the method for starting the unmanned vehicle according to some embodiments of the present disclosure, the occupation state information of the reference start position on the guide line may be determined firstly. Thus, it may be determined whether the target start point needs to be dynamically generated. Secondly, in response to a determination that the occupancy state information is an "occupied" state, a current position of the unmanned vehicle is projected to the guide line to determine an initial mileage value of the current position on the guide line. Then, the reference start mileage value of the reference start position on the guide line is determined. Therefore, this provides data support for the subsequent generation of a target start point. Finally, a target start point sequence is generated on the basis of the reference start mileage value and the initial mileage value. Thus, the problem that the unmanned vehicle will not be able to enter the start position normally when the reference start position is occupied is solved. Accordingly, target start points may be dynamically generated, the unmanned vehicle is facilitated to enter the start position normally, and the operating efficiency of the unmanned vehicle is improved.

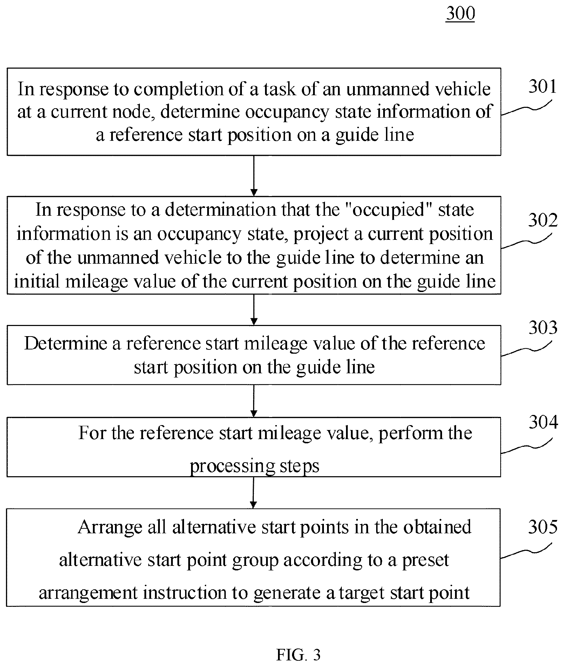

Referring to FIG. 3, some other embodiments of a method for starting an unmanned vehicle according to the present disclosure are shown. The method for starting the unmanned vehicle includes the following steps:
step 301, in response to completion of a task of the unmanned vehicle at a current node, determine occupancy state information of a reference start position on a guide line.
Step 302, in response to a determination that the occupancy state information is an "occupied" state, a current position of the unmanned vehicle is projected to the guide line to determine an initial mileage value of the current position on the guide line.
Step 303, a reference start mileage value of the reference start position on the guide line is determined.

In some embodiments, the specific implementation and technical effects of steps 301-303 may refer to steps 201-203 in the corresponding embodiments in FIG. 2, and will not be further described here.

Step 304, for the reference start mileage value, the processing steps are performed.

In some embodiments, the unmanned vehicle may perform the following processing steps for the reference start mileage value:
step one, position information corresponding to the reference start mileage value is obtained. Where the position information includes left road width corresponding to the guide line and right road width corresponding to the guide line. Here, the unmanned vehicle may obtain the position information corresponding to the reference start mileage value through radar detection or from a map system.
Step two, on the basis of the left road width and the reference start mileage value, at least one left alternative start point is generated through a preset threshold. Here, the preset threshold may be the width of the unmanned vehicle body. In practice, the unmanned vehicle may take a start width every preset threshold on the left side of the road, and then combine the reference start mileage value and the start widths to generate left alternative start points.
Step three, on the basis of the right road width and the reference start mileage value, at least one right alternative start point is generated through the preset threshold. In practice, the unmanned vehicle may take a start width every preset threshold on the right side of the road, and then combine the reference start mileage value and the start widths to generate right alternative start points.
Step four, the at least one left target start point and the at least one right alternative start point are merged to obtain an alternative start point group.
Step five, whether the difference between the reference start mileage value and the initial mileage value meets a preset condition is determined. Here, the preset condition may be "the difference between the reference start mileage value and the initial mileage value is greater than or equal to the length of the unmanned vehicle body".
Step six, in response to condition meeting, an alternative start mileage value is generated on the basis of the reference start mileage value and the initial mileage value.

In practice, step six may include the following sub-steps:
sub-step one, an initial start mileage value is generated on the basis of the reference start mileage value and the initial mileage value. In practice, the ratio of the difference between the reference start mileage value and the initial mileage value to a preset value may be used as the initial start mileage value. Here, the preset value may be a number set according to actual needs.
Sub-step two, the sum of the initial start mileage value and the initial mileage value is determined as an alternative start mileage value.
Step seven, the alternative start mileage value is determined as the reference start mileage value, and the processing steps are performed again.

Step 305, all alternative start points in the obtained alternative start point group are arranged according to a preset arrangement instruction to generate a target start point.

In some embodiments, the unmanned vehicle may arrange all alternative start points in the obtained alternative start point group according to a preset arrangement instruction to generate a target start point sequence. Here, the arrangement instruction may be: the higher the reference start mileage value, the higher the priority; for the alternative start points with the same reference start mileage value, the smaller the start width, the higher the priority; for the alternative start points with the same start width, the priority of the left alternative start points is greater than that of the right alternative start points.

From FIG. 3, it may be seen that compared to the descriptions of some embodiments corresponding to FIG. 2, the process 300 in some embodiments corresponding to FIG. 3 may arrange and process each alternative start point in the obtained alternative start point group based on the preset arrangement instruction. From this, it is possible to better recommend the target start point for the unmanned vehicle to start. In addition, by restricting the generation of target start points through conditions, the generated target start points may be better optimized.

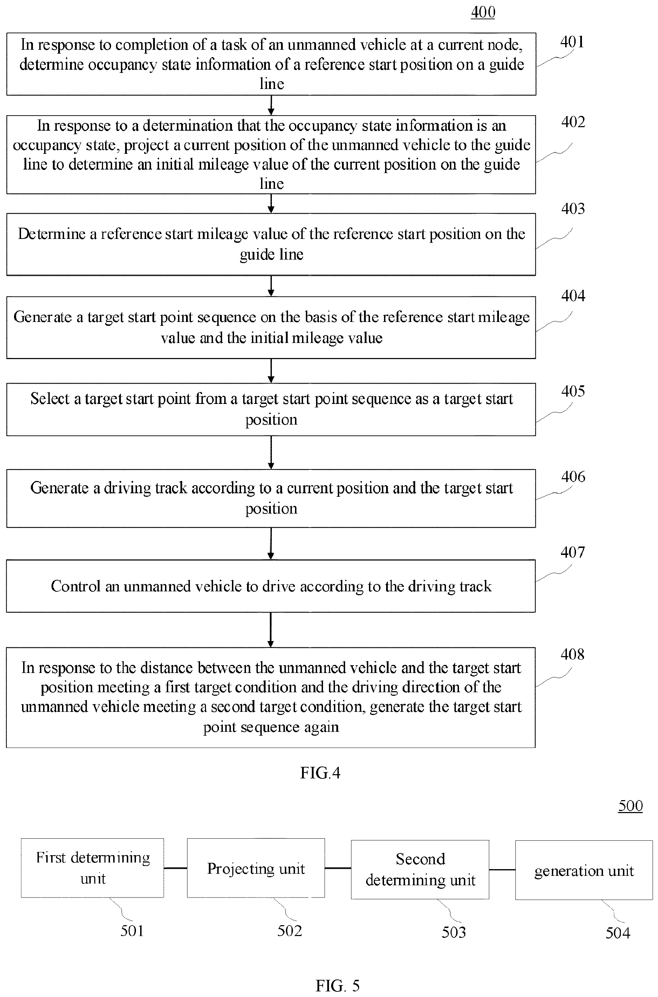

Referring to FIG. 4, some more embodiments of the method for starting the unmanned vehicle according to the present disclosure are shown. The method for starting the unmanned vehicle includes the following steps:
step 401, in response to completion of a task of the unmanned vehicle at a current node, determine occupancy state information of a reference start position on a guide line.
Step 402, in response to a determination that the occupancy state information is an "occupied" state, a current position of the unmanned vehicle is projected to the guide line to determine an initial mileage value of the current position on the guide line.
Step 403, a reference start mileage value of the reference start position on the guide line is determined.
Step 404, a target start point sequence is generated on the basis of the reference start mileage value and the initial mileage value.

In some embodiments, the specific implementation and technical effects of steps 401-404 may refer to steps 201-204 in the corresponding embodiments in FIG. 2, and will not be further described here.

Step 405, a target start point is selected from a target start point sequence as a target start position.

In some embodiments, the unmanned vehicle 101 may select the target start point with the highest priority from a target start point sequence as a target start position.

In some optional implementations of some embodiments, the unmanned vehicle 101 may perform the following steps for each target start point in the target start point sequence:
step one, the occupancy state information of the target start point is determined. In practice, the unmanned vehicle may determine occupancy state information of the target start position through radar detection, camera shooting or a wireless sensor.
Step two, in response to a determination that the occupancy state information is an "unoccupied" state, the target start point is determined as the target start position. In practice, once detecting that the occupancy state information of the target start point is an "unoccupied" state, the unmanned vehicle may determine the target start point as the target start position.

Step 406, a driving track is generated according to a current position and the target start position.

In some embodiments, the unmanned vehicle may plan the driving track from the current position to the target start position through a plurality of methods (simulated annealing algorithm, artificial potential field method, fuzzy logic algorithm, Tabu search algorithm, viewable space method, etc.).

Step 407, the unmanned vehicle is controlled to drive according to the driving track.

In some embodiments, the unmanned vehicle may control the vehicle body to drive to the target start position according to the driving track.

Step 408, in response to the distance between the unmanned vehicle and the target start position meeting a first target condition and the driving direction of the unmanned vehicle meeting a second target condition, the target start point sequence is generated again.

In some embodiments, in response to the distance between the unmanned vehicle and the target start position meeting a first target condition and the driving direction of the unmanned vehicle meeting a second target condition, the unmanned vehicle may re-generate the target start point sequence to meet the start requirement of the unmanned vehicle. Here, the first target condition may be "the distance between the unmanned vehicle and the target start position is less than or equal to a preset distance". Here, there are no restrictions on the setting of the preset distance. Here, the second target condition may be "the angle between the driving direction of the unmanned vehicle and the guide line is greater than or equal to a preset angle". Here, the preset angle may be set according to the length and width of the unmanned vehicle body.

From FIG. 4, it may be seen that compared to the descriptions of some embodiments corresponding to FIG. 2, the process 400 in some embodiments corresponding to FIG. 4 may re-generate the target start point sequence when the unmanned vehicle is unable to drive to the target start position normally. Accordingly, target start points may be dynamically generated, the unmanned vehicle is facilitated to enter the start position normally, and the operating efficiency of the unmanned vehicle is improved.

Referring to FIG. 5, as an implementation of the method shown in the above figures, the present disclosure provides some embodiments of an apparatus for starting an unmanned vehicle, which correspond to the method embodiments shown in FIG. 2. The apparatus may be specifically applied to various electronic devices.

As shown in FIG. 5, an apparatus 500 for starting the unmanned vehicle provided in some embodiments includes: a first determining unit 501, configured to determine occupancy state information of a reference start position on a guide line in response to completion of a task of the unmanned vehicle at a current node, where the guide line is a preset driving route of the unmanned vehicle from the current node to a next node, the reference start position is a position on the guide line to be reached by the unmanned vehicle from a current position, and the occupancy state information is an "occupied" state or an "unoccupied" state; a projecting unit 502, configured to project the current position of the unmanned vehicle to the guide line in response to a determination that the occupancy state information is the "occupied" state to determine an initial mileage value of the current position on the guide line; a second determining unit 503, configured to determine a reference start mileage value of the reference start position on the guide line; and a generation unit 504, configured to generate a target start point sequence on the basis of the reference start mileage value and the initial mileage value.

In some optional implementations of some embodiments, the generation unit 504 is specifically configured to: perform the following processing steps for the reference start mileage value: obtaining position information corresponding to the reference start mileage value, where the position information includes left road width corresponding to the guide line and right road width corresponding to the guide line; on the basis of the left road width and the reference start mileage value, generating at least one left alternative start point through a preset threshold; on the basis of the right road width and the reference start mileage value, generating at least one right alternative start point through the preset threshold; merging at least one left target start point and the at least one right alternative start point to obtain an alternative start point group; determining whether the difference between the reference start mileage value and the initial mileage value meets a preset condition; in response to condition meeting, generating an alternative start mileage value on the basis of the reference start mileage value and the initial mileage value; and determining the alternative start mileage value as the reference start mileage value, and performing the processing steps again.

In some optional implementations of some embodiments, the generation unit 504 is specifically configured to: arrange all alternative start points in the obtained alternative start point group according to a preset arrangement instruction to generate a target start point.

In some optional implementations of some embodiments, the generation unit 504 is specifically configured to: generate an initial start mileage value on the basis of the reference start mileage value and the initial mileage value; and determine the sum of the initial start mileage value and the initial mileage value as an alternative start mileage value.

In some optional implementations of some embodiments, the apparatus 500 for starting the unmanned vehicle further includes: a selecting unit, configured to select a target start point from a target start point sequence as a target start position.

In some optional implementations of some embodiments, the selecting unit is configured to: for each target start point in the target start point sequence, perform the following steps: determining the occupancy state information of the target start point; and in response to a determination that the occupancy state information is an "unoccupied" state, determining the target start point as the target start position.

In some optional implementations of some embodiments, the apparatus 500 for starting the unmanned vehicle further includes: a track generation unit, configured to generate a driving track according to the current position and the target start position; a controlling unit, configured to control the unmanned vehicle to drive along the driving track; and a target start point sequence generation unit, configured to generate the target start point sequence again in response to the distance between the unmanned vehicle and the target start position meeting a first target condition and the driving direction of the unmanned vehicle meeting a second target condition.

It may be understood that the units recorded in the apparatus 500 correspond to the various steps in the method described with reference to FIG. 2. Therefore, the operations, features, and beneficial effects described above for the method are also applicable to the apparatus 500 and the units contained therein, and will not be further described here.

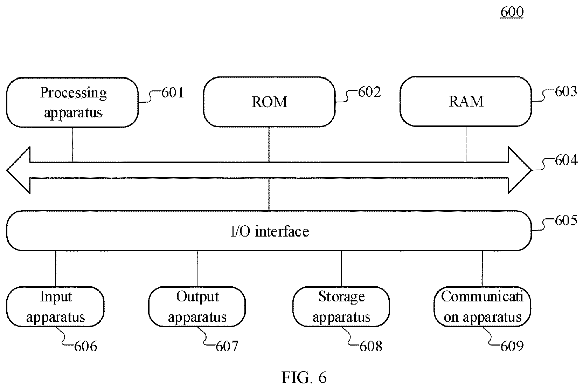

Referring to FIG. 6, a schematic structural diagram of an electronic device (such as computing device 101 in FIG. 1) 600 suitable for implementing some embodiments of the present disclosure is shown. The electronic device in some embodiments of the present disclosure may include, but is not limited to, mobile terminals such as mobile phones, laptops, digital broadcasting receivers, PDAs (personal digital assistants), PADs (tablets), PMPs (portable multimedia players), vehicle terminals (such as vehicle navigation terminals), and fixed terminals such as digital TVs, desktop computers, and the like. The electronic device shown in FIG. 6 is only an example and should not impose any limitations on the functionality and scope of use of the disclosed embodiments.

As shown in FIG. 6, the electronic device 600 may include a processing apparatus (such as a central processing unit, a graphics processor, etc.) 601, which may perform various appropriate actions and processing according to a program stored in a read-only memory (ROM) 602 or a program loaded from a storage apparatus 608 to a random access memory (RAM) 603. The RAM 603 may further store various programs and data required for the operation of the electronic device 600. The processing apparatus 601, the ROM 602 and the RAM 603 are mutually connected through a bus 604. An input/output (I/O) interface 605 is also connected to the bus 604.

Generally, the following apparatus may be connected to the I/O interface 605: an input apparatus 606 including such as a touch screen, a touchpad, a keyboard, a mouse, a camera, a microphone, an accelerometer, a gyroscope, etc.; an output apparatus 607 including such as a liquid crystal display (LCD), a speaker, a vibrator, etc.; a storage apparatus 608 including such as a magnetic tape, a hard drive, etc.; and a communication apparatus 609. The communication apparatus 609 may allow the electronic device 600 to communicate in a wireless or wired manner with other devices to exchange data. Although FIG. 6 illustrates the electronic device 600 with various apparatus, it should be understood that it is not required to implement or possess all the shown apparatus. More or less apparatus may be alternatively implemented or possessed. Each box shown in FIG. 6 may represent one apparatus, or represent a plurality of apparatus as needed.

Specifically, according to some embodiments of the present disclosure, the process described with reference to the flowchart may be implemented as a computer software program. For example, some embodiments of the present disclosure include a computer program product that includes a computer program hosted on a computer-readable medium, and the computer program includes a program code for executing the method shown in the flowchart. In some embodiments, the computer program may be downloaded and installed from the internet through the communication apparatus 609, installed from the storage apparatus 608, or installed from ROM 602. When the computer program is executed by the processing apparatus 601, the functions defined in some embodiments of the present disclosure are executed.

It should be noted that the computer-readable medium recorded in some embodiments of the present disclosure may be a computer-readable signal medium, a computer-readable storage medium, or any combination of the two. The computer-readable medium may be, for example, but is not limited to, an electronic, magnetic, optical, electromagnetic, infrared, or semiconductor system, apparatus, or device, or any combination thereof. More specific examples of the computer-readable storage medium may include, but are not limited to: an electrical connector with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In some embodiments of the present disclosure, the computer-readable storage medium may be any tangible medium containing or storing a program, and the program may be used by or in combination with an instruction execution system, apparatus or device. In some embodiments of the present disclosure, the computer-readable signal medium may include data signals propagated in the baseband or as part of the carrier, and the data signals carry the computer-readable program code. This propagated data signals may adopt various forms, including but not limited to electromagnetic signals, optical signals, or any suitable combination thereof. A computer-readable signal medium may also be any computer-readable medium other than a computer-readable storage medium, and may send, propagate, or transmit a program for use by or in combination with an instruction execution system, apparatus or device. The program code contained on computer-readable medium may be transmitted by using any suitable medium, including but not limited to: wires, optical cables, RF (radio frequency), etc., or any suitable combination thereof.

In some embodiments, a client and a server may communicate by using any currently known or future developed network protocol such as HTTP (Hyper Text Transfer Protocol), and may interconnect with digital data communication (for example, communication network) in any form or medium. Examples of the communication network include a local area network (LAN), a wide area network (WAN), internet work (such as the internet), and an end-to-end network (such as an ad hoc end-to-end network), as well as any currently known or future developed networks.

The computer-readable medium may be included in the electronic device; it may also exist separately without being assembled into the electronic device. The computer-readable medium carries at least one program, and when the at least one program is executed by the electronic device, the electronic device is enabled to: in response to completion of a task of the unmanned vehicle at a current node, determine occupancy state information of a reference start position on a guide line, where the guide line is a preset driving route of the unmanned vehicle from the current node to a next node, the reference start position is a position on the guide line to be reached by the unmanned vehicle from a current position, and the occupancy state information is an "occupied" state or an "unoccupied" state; in response to a determination that the occupancy state information is the "occupied" state, project the current position of the unmanned vehicle to the guide line to determine an initial mileage value of the current position on the guide line; determine a reference start mileage value of the reference start position on the guide line; and generate a target start point sequence on the basis of the reference start mileage value and the initial mileage value.

The computer program code for executing operation of some embodiments of the present disclosure may be written in one or more programming languages or a combination thereof, and the programming languages include object-oriented programming languages such as Java, Smalltalk, C++, and conventional procedural programming languages such as "C" language or similar programming languages. The program code may be completely executed on a user's computer, partially executed on a user's computer, executed as an independent software package, partially executed on a user's computer and partially executed on a remote computer, or completely executed on a remote computer or server. In cases involving the remote computer, the remote computer may be connected to the user's computer through any type of network, including a local area network (LAN) or wide area network (WAN), or may be connected to an external computer (for example, using an internet service provider to connect through the internet).

The flowcharts and block diagrams in the drawings show the possibly implemented architecture, functions and operations of the systems, methods and computer program products in the embodiments of the present disclosure. In this regard, each block in the flowcharts or block diagrams may represent a module, program segment, or part of a code, and the module, program segment, or part of the code includes at least one executable instruction for implementing the specified logical functions. It should also be noted that in some alternative implementations, the functions annotated in the blocks may also occur in a different order from the order annotated in the drawings. For example, two consecutive blocks may actually be executed substantially in parallel, or they may sometimes be executed in a reverse order, which depends on the functions involved. It should also be noted that each block in the block diagrams and/or flowcharts, and a combination of the blocks in the block diagrams and/or flowcharts, may be implemented by a dedicated hardware-based system that performs the specified functions or actions, or may be implemented by a combination of dedicated hardware and computer instructions.

The units described in some embodiments of the present disclosure may be implemented through software or hardware. The described units may also be arranged in a processor, for example, the units may be described as: a processor includes a first determining unit, a projecting unit, a second determining unit and a generation unit. Where the names of the units do not constitute a limitation on the units in a certain case. For example, the projecting unit may also be described as "a unit that projects the current position of the unmanned vehicle onto the guide line in response to a determination that the occupation state information is an occupancy state, in order to determine the initial mileage value of the current position on the guide line".

The functions described in the present disclosure may be at least partially executed by at least one hardware logic component. For example, non-restrictively, demonstration types of the hardware logic components that may be used include: an FPGA (Field-Programmable Gate Array), an ASIC (Application Specific Integrated Circuit), an ASSP (Application Specific Standard Product), an SOC (System On Chip), a CPLD (Complex Programmable Logic Device), and so on.

## Claims

1. A method for starting an unmanned vehicle (101), applied to the unmanned vehicle (101) and comprising:
in response to completion of a task of the unmanned vehicle (101) at a current task node, determining (201) occupancy state information of a reference start position (103) on a guide line (102), wherein the guide line (102) is a preset driving route of the unmanned vehicle (101) from the current task node to a next task node, the reference start position (103) is a position on the guide line (102) to be reached by the unmanned vehicle (101) from a current position, and the occupancy state information is an "occupied" state or an "unoccupied" state,
**characterized in that** the method comprises:
in response to a determination that the occupancy state information is the "occupied" state, projecting (202) the current position of the unmanned vehicle (101) to the guide line (102) to determine an initial mileage value of the unmanned vehicle (101) on the guide line (102), the initial mileage value being a distance between a projection position (104) of the unmanned vehicle (101) on the guide line (102) and a start point (105) on the guide line (102);
determining (203) a reference start mileage value of the reference start position (103) on the guide line (102), the reference start mileage value being a distance between the reference start position (103) and the start point (105) on the guide line (102);
generating (204) dynamically a target start point sequence (106) on the basis of the reference start mileage value and the initial mileage value, wherein each target start point in the target start point sequence (106) is a new position point obtained by calculating based on the reference start mileage value and the initial mileage value; and
selecting (405) a target start point from the target start point sequence (106) as a target start position of the unmanned vehicle (101),
wherein the generating (204) dynamically the target start point sequence (106) on the basis of the reference start mileage value and the initial mileage value comprises:
for the reference start mileage value, performing (304) the following processing steps:
obtaining position information corresponding to the reference start mileage value, wherein the position information comprises left road width corresponding to the guide line (102) and right road width corresponding to the guide line (102);
on the basis of the left road width and the reference start mileage value, generating at least one left alternative start point through a preset threshold, , wherein the generating at least one left alternative start point through the preset threshold includes obtaining a start width every preset threshold on the left road width corresponding to the guide line (102), and combining the reference start mileage value and the start width to generate a left alternative start point;
on the basis of the right road width and the reference start mileage value, generating at least one right alternative start point through the preset threshold, wherein the generating at least one right alternative start point through the preset threshold includes obtaining the start width every preset threshold on the right road width corresponding to the guide line (102), and combining the reference start mileage value and the start width to generate a right alternative start point;
merging at least one left target start point and the at least one right alternative start point to obtain an alternative start point group;
arranging (305) all alternative start points in the obtained alternative start point group according to a preset arrangement instruction, to generate the target start point sequence (106);
determining whether the difference between the reference start mileage value and the initial mileage value meets a preset condition;
in response to a determination that the difference between the reference start mileage value and the initial mileage value meets the preset condition , generating an alternative start mileage value on the basis of the reference start mileage value and the initial mileage value; and
determining the alternative start mileage value as the reference start mileage value, and performing the processing steps again.

2. The method according to claim 1, wherein the generating an alternative start mileage value on the basis of the reference start mileage value and the initial mileage value comprises:
generating an initial start mileage value on the basis of the reference start mileage value and the initial mileage value; and
determining the sum of the initial start mileage value and the initial mileage value as an alternative start mileage value.

3. The method according to claim 1, wherein the selecting (405) a target start point from the target start point sequence (106) as the target start position comprises:
for each target start point in the target start point sequence (106), performing the following steps:
determining an occupancy state information of the target start point; and
in response to a determination that the occupancy state information is an "unoccupied" state, determining the target start point as the target start position.

4. The method according to claim 1 or 3, wherein the method further comprises:
generating (406) a driving track according to the current position and the target start position;
controlling (407) the unmanned vehicle (101) to drive according to the driving track; and
in response to the distance between the unmanned vehicle (101) and the target start position meeting a first target condition and the driving direction of the unmanned vehicle (101) meeting a second target condition, generating (408) the target start point sequence (106) again, wherein the first target condition includes that a distance between the unmanned vehicle and the target start position is less than or equal to a preset distance and the second target condition includes that an angle between the driving direction of the unmanned vehicle and the guide line is greater than or equal to a preset angle.

5. A computer program comprising instructions which, when the program is executed by a processor, cause the processor to carry out the method of any of claims 1 to 4.

6. An electronic device, comprising:
at least one processor;
a storage apparatus, storing the computer program of claim 5; and
a radar, configured to monitor objects.

7. A computer-readable medium, storing the computer program of claim 5.

## Patentansprüche

1. Verfahren zum Starten eines unbemannten Fahrzeugs (101), das auf das unbemannte Fahrzeug (101) angewendet wird und Folgendes umfasst:
als Reaktion auf den Abschluss einer Aufgabe des unbemannten Fahrzeugs (101) an einem aktuellen Aufgabenknoten Bestimmen von (201) Belegungszustandsinformationen einer Referenzstartposition (103) auf einer Leitlinie (102), wobei die Leitlinie (102) eine voreingestellte Fahrroute des unbemannten Fahrzeugs (101) vom aktuellen Aufgabenknoten zu einem nächsten Aufgabenknoten ist, die Referenzstartposition (103) eine Position auf dieser Leitlinie (102) ist, die vom unbemannten Fahrzeug (101) von einer aktuellen Position aus zu erreichen ist, und die Belegungszustandsinformationen ein "Belegt"-Zustand oder ein "Frei"-Zustand sind,
**dadurch gekennzeichnet, dass** das Verfahren Folgendes umfasst:
als Reaktion auf eine Feststellung, dass die Belegungszustandsinformationen der "Belegt"-Zustand sind, Projizieren (202) der aktuellen Position des unbemannten Fahrzeugs (101) auf die Leitlinie (102), um einen anfänglichen Kilometerwert des unbemannten Fahrzeugs (101) auf der Leitlinie (102) bestimmen, wobei der anfängliche Kilometerwert ein Abstand zwischen einer Projektionsposition (104) des unbemannten Fahrzeugs (101) auf der Leitlinie (102) und einem Startpunkt (105) auf der Leitlinie (102) ist;
Bestimmen (203) eines Referenzstartkilometerwerts der Referenzstartposition (103) auf der Leitlinie (102), wobei der Referenzstartkilometerwert ein Abstand zwischen der Referenzstartposition (103) und dem Startpunkt (105) auf der Leitlinie (102) ist;
dynamisches Generieren (204) einer Zielstartpunktsequenz (106) auf der Grundlage des Referenzstartkilometerwerts und des anfänglichen Kilometerwerts, wobei jeder Zielstartpunkt in der Zielstartpunktsequenz (106) ein neuer Positionspunkt ist, der durch Berechnung auf der Grundlage des Referenzstartkilometerwerts und des anfänglichen Kilometerwerts erhalten wird, und
Auswählen (405) eines Zielstartpunkts aus der Zielstartpunktsequenz (106) als Zielstartposition des unbemannten Fahrzeugs (101),
wobei das dynamische Generieren (204) der Zielstartpunktsequenz (106) auf der Grundlage des Referenzstartkilometerwerts und des anfänglichen Kilometerwerts Folgendes umfasst:
Durchführen (304) der folgenden Verarbeitungsschritte bezüglich des Referenzstartkilometerwerts:
Erhalten von Positionsinformationen entsprechend dem Referenzstartkilometerwert, wobei die Positionsinformationen die linke Straßenbreite entsprechend der Leitlinie (102) und die rechte Straßenbreite entsprechend der Leitlinie (102) umfassen;
auf der Grundlage der linken Straßenbreite und des Referenzstartkilometerwerts Generieren von mindestens einem linken alternativen Startpunkt durch einen voreingestellten Schwellenwert, wobei das Generieren von mindesten einem linken alternativen Startpunkt durch den voreingestellten Schwellenwert das Erhalten einer Startbreite für jeden voreingestellten Schwellenwert auf der linken Straßenbreite entsprechend der Leitlinie (102) und das Kombinieren des Referenzstartkilometerwerts und der Startbreite, um einen linken alternativen Startpunkt zu generieren, beinhaltet;
auf der Grundlage der rechten Straßenbreite und des Referenzstartkilometerwerts Generieren von mindestens einem rechten alternativen Startpunkt durch einen voreingestellten Schwellenwert, wobei das Generieren von mindesten einem rechten alternativen Startpunkt durch den voreingestellten Schwellenwert das Erhalten der Startbreite für jeden voreingestellten Schwellenwert auf der rechten Straßenbreite entsprechend der Leitlinie (102) und das Kombinieren des Referenzstartkilometerwerts und der Startbreite, um einen rechten alternativen Startpunkt zu generieren, beinhaltet;
Zusammenführen von mindestens einem linken Zielstartpunkt und des mindestens einen rechten alternativen Startpunkts, um eine alternative Startpunktgruppe zu erhalten;
Anordnen (305) aller alternativen Startpunkte in der erhaltenen alternativen Startpunktgruppe gemäß einer voreingestellten Anordnungsanweisung, um die Zielstartpunktsequenz (106) zu generieren;
Bestimmen, ob die Differenz zwischen dem Referenzstartkilometerwert und dem anfänglichen Kilometerwert eine voreingestellte Bedingung erfüllt;
als Reaktion auf eine Feststellung, dass die Differenz zwischen dem Referenzstartkilometerwert und dem anfänglichen Kilometerwert die voreingestellte Bedingung erfüllt, Generieren eines alternativen Startkilometerwert auf der Grundlage des Referenzstartkilometerwerts und des anfänglichen Kilometerwerts, sowie
Bestimmen des alternativen Startkilometerwerts als Referenzstartkilometerwert und erneutes Durchführen der Verarbeitungsschritte.

2. Verfahren nach Anspruch 1, wobei das Generieren eines alternativen Startkilometerwerts auf der Grundlage des Referenzstartkilometerwerts und des anfänglichen Kilometerwerts Folgendes umfasst:
Generieren eines anfänglichen Startkilometerwerts auf der Grundlage des Referenzstartkilometerwerts und des anfänglichen Kilometerwerts und
Bestimmen der Summe des anfänglichen Startkilometerwerts und des anfänglichen Kilometerwerts als alternativen Startkilometerwert.

3. Verfahren nach Anspruch 1, wobei das Auswählen (405) eines Zielstartpunkts aus der Zielstartpunktsequenz (106) als Zielstartposition Folgendes umfasst:
Durchführen der folgenden Schritte für jeden Zielstartpunkt in der Zielstartpunktsequenz (106):
Bestimmen von Belegungszustandsinformationen des Zielstartpunkts und
als Reaktion auf eine Feststellung, dass die Belegungszustandsinformationen ein "Frei"-Zustand sind, Bestimmen des Zielstartpunkts als Zielstartposition.

4. Verfahren nach Anspruch 1 oder 3, wobei das Verfahren ferner Folgendes umfasst:
Generieren (406) einer Fahrspur gemäß der aktuellen Position und der Zielstartposition;
Steuern (407) des unbemannten Fahrzeugs (101), um gemäß der Fahrspur zu fahren, und
als Reaktion darauf, dass der Abstand zwischen dem unbemannten Fahrzeug (101) und der Zielstartposition eine erste Zielbedingung erfüllt und die Fahrtrichtung des unbemannten Fahrzeugs (101) eine zweite Zielbedingung erfüllt, erneutes Generieren (408) der Zielstartpunktsequenz (106), wobei die erste Zielbedingung beinhaltet, dass ein Abstand zwischen dem unbemannten Fahrzeug und der Zielstartposition kleiner oder gleich einem voreingestellten Abstand ist, und die zweite Zielbedingung beinhaltet, dass ein Winkel zwischen der Fahrtrichtung des unbemannten Fahrzeugs und der Leitlinie größer oder gleich einem voreingestellten Winkel ist.

5. Computerprogramm, umfassend Anweisungen, die, wenn das Programm durch einen Prozessor ausgeführt wird, bewirken, dass der Prozessor das Verfahren nach einem der Ansprüche 1 bis 4 ausführt.

6. Elektronische Vorrichtung, umfassend:
mindestens einen Prozessor;
ein Speichergerät, das das Computerprogramm nach Anspruch 5 speichert, und
ein Radar, das ausgelegt ist, um Objekte zu überwachen.

7. Computerlesbares Medium, das das Computerprogramm nach Anspruch 5 speichert.

## Revendications

1. Procédé de démarrage d'un véhicule sans conducteur (101), appliqué au véhicule sans conducteur (101) et comprenant :
en réponse à l'achèvement d'une tâche du véhicule sans conducteur (101) au niveau d'un nœud de tâche actuel, la détermination (201) d'une information d'état d'occupation d'une position de départ de référence (103) sur une ligne de guidage (102), dans lequel la ligne de guidage (102) est une route de déplacement prédéfinie du véhicule sans conducteur (101) partant du nœud de tâche actuel jusqu'à un nœud de tâche suivant, la position de départ de référence (103) est une position sur la ligne de guidage (102) à atteindre par le véhicule sans conducteur (101) à partir d'une position actuelle, et l'information d'état d'occupation est un état « occupé » ou un état « inoccupé »,
**caractérisé en ce que** le procédé comprend :
en réponse à la détermination que l'information d'état d'occupation est l'état « occupé », la projection (202) de la position actuelle du véhicule sans conducteur (101) sur la ligne de guidage (102) pour déterminer une valeur de kilométrage initiale du véhicule sans conducteur (101) sur la ligne de guidage (102), la valeur de kilométrage initiale étant une distance entre une position de projection (104) du véhicule sans conducteur (101) sur la ligne de guidage (102) et un point de départ (105) sur la ligne de guidage (102) ;
la détermination (203) d'une valeur de kilométrage de départ de référence (103) sur la ligne de guidage (102), la valeur de kilométrage de départ de référence étant une distance entre la position de départ de référence (103) et le point de départ (105) sur la ligne de guidage (102) ;
la génération (204) dynamique d'une séquence de points de départ cibles (106) sur la base de la valeur de kilométrage de départ de référence et de la valeur de kilométrage initiale, dans lequel chaque point de départ cible dans la séquence de points de départ cibles (106) est un nouveau point de position obtenu par calcul sur la base de la valeur de kilométrage de départ de référence et de la valeur de kilométrage initiale ; et
la sélection (405) d'un point de départ cible à partir de la séquence de points de départ cibles (106) comme une position de départ cible du véhicule sans conducteur (101),
dans lequel la génération (204) dynamique de la séquence de points de départ cibles (106) sur la base de la valeur de kilométrage de départ de référence et de la valeur de kilométrage initiale comprend :
pour la valeur de kilométrage de départ de référence, la réalisation (304) des étapes de traitement suivantes :
l'obtention d'une information de position correspondant à la valeur de kilométrage de départ de référence, dans lequel l'information de position comprend une largeur de route gauche correspondant à la ligne de guidage (102) et une largeur de route droite correspondant à la ligne de guidage (102) ;
sur la base de la largeur de route gauche et de la valeur de kilométrage de départ de référence, la génération d'au moins un point de départ alternatif gauche à travers un seuil prédéfini, dans lequel la génération d'au moins un point de départ alternatif gauche à travers le seuil prédéfini comporte l'obtention d'une largeur de départ à chaque seuil prédéfini sur la largeur de route gauche correspondant à la ligne de guidage (102), et la combinaison de la valeur de kilométrage de départ de référence et de la largeur de départ pour générer un point de départ alternatif gauche ;
sur la base de la largeur de route droite et de la valeur de kilométrage de départ de référence, la génération d'au moins un point de départ alternatif droit à travers le seuil prédéfini, dans lequel la génération d'au moins un point de départ alternatif droit à travers le seuil prédéfini comporte l'obtention de la largeur de départ à chaque seuil prédéfini sur la largeur de route droite correspondant à la ligne de guidage (102), et la combinaison de la valeur de kilométrage de départ de référence et de la largeur de départ pour générer un point de départ alternatif droit ;
la fusion d'au moins un point de départ cible gauche et d'au moins un point de départ alternatif droit pour obtenir un groupe de points de départ alternatifs ;
l'agencement (305) de tous les points de départ alternatifs dans le groupe de points de départ alternatifs obtenu en fonction d'une instruction d'agencement prédéfinie, pour générer la séquence de points de départ cibles (106) ;
la détermination que la différence entre la valeur de kilométrage de départ de référence et la valeur de kilométrage initiale satisfait, ou pas, une condition prédéfinie ;
en réponse à la détermination que la différence entre la valeur de kilométrage de départ de référence et la valeur de kilométrage initiale satisfait la condition prédéfinie, la génération d'une valeur de kilométrage de départ alternative sur la base de la valeur de kilométrage de départ de référence et de la valeur de kilométrage initiale ; et
la détermination de la valeur de kilométrage de départ alternative comme la valeur de kilométrage de départ de référence, et la réalisation à nouveau des étapes de traitement.

2. Procédé selon la revendication 1, dans lequel la génération d'une valeur de kilométrage de départ alternative sur la base de la valeur de kilométrage de départ de référence et de la valeur de kilométrage initiale comprend :
la génération d'une valeur de kilométrage de départ initiale sur la base de la valeur de kilométrage de départ de référence et de la valeur de kilométrage initiale ; et
la détermination de la somme de la valeur de kilométrage de départ initiale et de la valeur de kilométrage initiale comme une valeur de kilométrage de départ alternative.

3. Procédé selon la revendication 1, dans lequel la sélection (405) d'un point de départ cible à partir de la séquence de points de départ cibles (106) comme la position de départ cible comprend :
pour chaque point de départ cible dans la séquence de points de départ cibles (106), la réalisation des étapes suivantes :
la détermination d'une information d'état d'occupation du point de départ cible ; et
en réponse à la détermination que l'information d'état d'occupation est un état « inoccupé », la détermination du point de départ cible comme la position de départ cible.

4. Procédé selon la revendication 1 ou 3, dans lequel le procédé comprend en outre :
la génération (406) d'un itinéraire de déplacement en fonction de la position actuelle et de la position de départ cible ;
la commande (407) du véhicule sans conducteur (101) pour se déplacer suivant l'itinéraire de déplacement ; et
en réponse à la distance entre le véhicule sans conducteur (101) et la position de départ cible satisfaisant une première condition cible et la direction de déplacement du véhicule sans conducteur (101) satisfaisant une deuxième condition cible, la génération (408) à nouveau de la séquence de points de départ cibles (106), dans lequel la première condition cible comporte une distance entre le véhicule sans conducteur et la position de départ cible étant plus courte ou égale à une distance prédéfinie et la deuxième condition cible comporte un angle entre la direction de déplacement du véhicule sans conducteur et la ligne de guidage étant plus grand ou égal à un angle prédéfini.

5. Programme informatique comprenant des instructions qui, lorsque le programme est exécuté par un processeur, amènent le processeur à réaliser le procédé selon l'une des revendications 1 à 4.

6. Dispositif électronique, comprenant :
au moins un processeur ;
un appareil de stockage, stockant le programme informatique selon la revendication 5 ; et
un radar, configuré pour surveiller des objets.

7. Support lisible par ordinateur, stockant le programme informatique selon la revendication 5.
